# EUROPÄISCHE PATENTSCHRIFT

(11) **EP 1 855 778 B1**
(45) Veröffentlichungstag und Bekanntmachung des Hinweises auf die Patenterteilung: **17.02.2010**
(21) Anmeldenummer: 06708691.8
(22) Anmeldetag: 08.03.2006
(51) Int. Cl.: B01D 35/147, B01D 35/153, B01D 35/18, F01M 11/03

(54) **FLÜSSIGKEITSFILTER-WÄRMETAUSCHER-EINHEIT**
LIQUID FILTER HEAT EXCHANGER UNIT
ENSEMBLE ECHANGEUR DE CHALEUR-FILTRE A LIQUIDE

(30) Priorität: 11.03.2005 DE 102005011221
(43) Veröffentlichungstag der Anmeldung: 21.11.2007
(73) Patentinhaber: MANN + HUMMEL GMBH, 71638 Ludwigsburg (DE)
(72) Erfinder: JAINEK, Herbert, 74074 Heilbronn (DE)
(74) Vertreter: Voth, Gerhard
(86) Internationale Anmeldenummer: PCT/EP2006/060561
(87) Internationale Veröffentlichungsnummer: WO 2006/094996

(56) Entgegenhaltungen:
- WO-A-02/36940
- DE-A1- 10 245 005
- DE-A1- 19 635 777
- US-A- 4 638 856
- US-A- 5 575 329

## Beschreibung

Die Erfindung bezieht sich auf eine Flüssigkeitsfilter-Wärmetauscher-Einheit nach dem Oberbegriff des Anspruches 1.

In der Druckschrift DE 102 45 005 A1 wird eine derartige Flüssigkeitsfilter-Wärmetauscher-Einheit beschrieben, welche zur Ölkühlung und Ölreinigung des zur Motorkühlung benötigten Öls eingesetzt wird. Diese Flüssigkeitsfilter-Wärmetauscher-Einheit umfasst einen Flüssigkeitsfilter mit einem im Filtergehäuse angeordneten, hohlzylindrischen Filterelement, welches radial von dem Öl zu durchströmen ist, sowie einen am Filtergehäuse angeflanschten Wärmetauscher, in welchem das Öl gekühlt wird. Das ungereinigte und erwärmte Rohöl strömt über einen Zulaufkanal, welcher in das Filtergehäuse eingebracht ist, zunächst in den Wärmetauscher, wird dort gekühlt und fließt aus diesem über eine Auslassöffnung zur Rohseite des Filterelementes in einen das Filterelement beinhaltenden Aufnahmeraum im Filtergehäuse. Das Filterelement wird radial von außen nach innen durchströmt, anschließend fließt das gereinigte Rohöl aus dem Filterinnenraum axial über einen Ablaufkanal aus der Flüssigkeitsfilter-Wärmetauscher-Einheit ab und wird wieder in den Ölkreislauf im Motorblock der Brennkraftmaschine eingeleitet.

Um insbesondere nach einem Kaltstart ein Verstopfen des Wärmetauschers aufgrund der bei niedrigen Temperaturen erhöhten Viskosität des Öls zu verhindern, zweigt vom Zulaufkanal im Filterelement ein Bypass ab, der unmittelbar mit dem Aufnahmeraum im Bereich der Rohseite des Filterelementes verbunden ist. Dieser Bypass ist im regulären Betrieb, bei dem das Rohöl bereits seine Betriebstemperatur erreicht hat, von einem als Bimetallelement ausgeführten Schaltglied oder einem Umgehungsventil verschlossen, um einen unmittelbaren Übertritt des erhitzten Rohöls zur Rohseite des Filterelementes unter Umgehung des Wärmetauschers zu verhindern und das Öl über den Wärmetauscher zu leiten. Bei niedrigen Temperaturen wird dagegen das Schaltglied selbsttätig geöffnet, sodass der Bypass geöffnet ist und das Rohöl direkt zur Rohseite des Filterelementes geleitet wird. Auf diese Weise wird der Wärmetauscher umgangen und ein überhoher Druckaufbau im Schmierkreislauf vermieden.

Soll unabhängig von der aktuellen Temperatur das Öl aus der Flüssigkeitsfilter-Wärmetauscher-Einheit abgelassen werden, beispielsweise um einen Ölwechsel durchzuführen, muss darauf geachtet werden, dass nur ein möglichst geringes Restvolumen des Öls im Filter oder im Wärmetauscher verbleibt.

Der Erfindung liegt das Problem zugrunde, eine Flüssigkeitsfilter-Wärmetauscher-Einheit mit konstruktiv einfachen Maßnahmen in der Weise auszubilden, dass temperaturunabhängig ein möglichst weitgehendes Ablassen von Flüssigkeit aus dem Wärmetauscher möglich ist.

Dieses Problem wird erfindungsgemäß mit den Merkmalen des Anspruches 1 gelöst. Die Unteransprüche geben zweckmäßige Weiterbildungen an.

Bei der erfindungsgemäßen Flüssigkeitsfilter-Wärmetauscher-Einheit ist das Schaltglied, über das der Bypass zwischen dem Zulauf im Filtergehäuse und der Rohseite des Filterelementes zu öffnen bzw. zu verschließen ist, von dem Filterelement selbst gebildet. Dies erfolgt in der Weise, dass der Bypass verschlossen ist, solange das Filterelement in das Filtergehäuse eingesetzt ist und seine Betriebs- bzw. Funktionsposition einnimmt. Sobald jedoch das Filterelement aus dem Filtergehäuse entnommen wird und somit seine Funktionsposition verlässt, wird der Bypass geöffnet, sodass ein unmittelbarer Übertritt von Rohöl aus dem Zulauf zur Rohseite möglich ist. Von der Rohseite aus kann das Öl bei entferntem Filterelement unmittelbar aus dem Filtergehäuse abgelassen werden.

Wird der Bypass durch das Entnehmen des Filterelementes in seine Öffnungsstellung versetzt, kann die im Wärmetauscher verbliebene Flüssigkeit aufgrund des hydrostatischen Druckunterschiedes in Richtung Zulauf zurückströmen und über den Bypass der Rohseite zugeführt werden. Dies hat zur Folge, dass praktisch die gesamte im Wärmetauscher verbliebene Flüssigkeit aus diesem abgelassen wird, sobald das Filterelement entnommen wird. Das Filterelement selbst stellt das Schaltglied zum Öffnen und Schließen der Bypassöffnung dar. Um ein möglichst vollständiges Entleeren des Wärmetauschers sicherzustellen, verläuft der Bypass zweckmäßig etwa in Höhe oder unterhalb der Einlassöffnung zwischen dem Zulaufkanal im Filtergehäuse und dem Wärmetauscher.

In einer vorteilhaften Ausführung ist der Zulaufkanal im Filtergehäuse unmittelbar mit dem Bypass verbunden. In dieser Ausführung strömt nach dem Entnehmen des Filterelementes aus dem Filtergehäuse die im Wärmetauscher verbliebene Flüssigkeit über die Einlassöffnung zurück in den Zulaufkanal und von diesem über den Bypass zur Rohseite des Filterelementes.

Grundsätzlich reicht es aus, dass die Bypassöffnung auf der Filterseite von dem Filterelement selbst verschlossen ist. Hierbei handelt es sich um eine besonders einfache und zweckmäßige Ausführung, wobei bevorzugt die Mantelfläche einer stirnseitigen Abschlussscheibe am Filterelement an der Bypassöffnung anliegt und diese verschließt. Die Bypassöffnung wird automatisch freigegeben, sobald das Filterelement aus dem Aufnahmeraum im Filtergehäuse entfernt wird.

Möglich ist aber auch ein Zusammenwirken zwischen dem Filterelement als Schaltglied und einem Verschlusselement, welches an einer der Öffnungen des Bypasses oder auch innerhalb des Bypasses angeordnet ist. In dieser Ausführung öffnet und schließt die Bewegung des Filterelements den Bypass mittelbar.

Ein derartiges Verschlusselement, das insbesondere an der dem Filterelement zugewandten Bypassöffnung platziert sein kann, ist beispielhaft als Verschlussspange ausgeführt, welche zwischen einer Öffnungsposition und einer Schließposition zu verstellen ist und zweckmäßigerweise in Richtung ihrer Öffnungsposition vorgespannt ist, jedoch von dem eingesetzten Filterelement in die Schließposition beaufschlagt wird. Wird das Filterelement entnommen, verstellt sich das Verschlusselement unter der Wirkung seiner Eigenspannung selbsttätig in die Öffnungsstellung, wodurch der Bypass freigegeben wird. Mit dem Einsetzen des Filterelementes in den Aufnahmeraum wird das Verschlusselement wieder geschlossen.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine Flüssigkeitsfilter-Wärmetauscher-Einheit, die zur Reinigung und Kühlung von Öl an einen Motorblock einer Brennkraftmaschine angeflanscht wird,
- Fig. 2: eine Detailansicht mit einem Ausschnitt eines Filterelementes und einer Verschlussspange, welche bei eingesetztem Filterelement eine Öffnung des Bypasses verschließt,

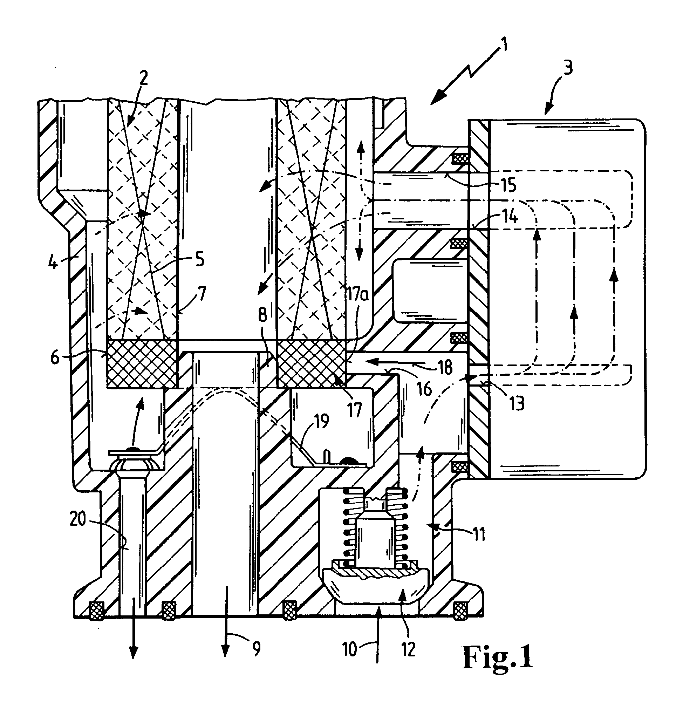

Die in Fig. 1 dargestellte Flüssigkeitsfilter-Wärmetauscher-Einheit 1 dient zum Kühlen und Reinigen von Motoröl oder Getriebeöl in einer Brennkraftmaschine und umfasst einen Flüssigkeitsfilter 2 und einen Wärmetauscher 3, wobei Flüssigkeitsfilter 2 und Wärmetauscher 3 zwar als eigenständige Bauteile ausgeführt, jedoch fest miteinander verbunden sind. Der Flüssigkeitsfilter 2 weist in einem Aufnahmeraum in einem Filtergehäuse 4 ein als Hohlzylinder ausgeführtes Filterelement 5 auf, dessen radiale Außenseite die von der zu reinigenden Rohflüssigkeit radial anzuströmende Rohseite 6 und dessen zylindrischer Innenraum die Reinseite 7 bildet, über die die Aufnahmeraum des Filtergehäuses 4 befindliche Flüssigkeit über den Ablaufkanal 20 abströmen. Das Entnehmen des Filterelements erfolgt bei abgeschalteter Brennkraftmaschine.

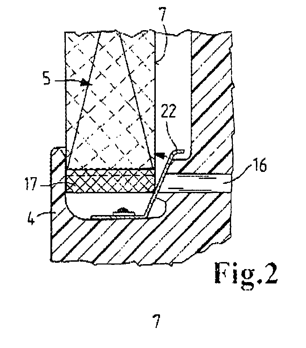

In Fig. 2 ist ein Ausschnitt einer Flüssigkeitsfilter-Wärmetauscher-Einheit in einer modifizierten Ausführung dargestellt. Der sich durch das Filtergehäuse 4 erstreckende Bypass 16 wird im Bereich seiner dem Filterelement 5 zugewandten Mündungsöffnung von einem Verschlusselement 22, welches als Verschlussspange ausgeführt ist, verschlossen. Das Verschlusselement 22 ist am Grund des Aufnahmeraumes für das Filterelement 5 über einen Niet befestigt und liegt dichtend an der Mündungsöffnung des Bypasses 16 an. Die Eigenspannung des Verspannungselementes 22 beaufschlagt dieses in seine Öffnungsstellung, in der der Bypass 16 freigegeben ist. Eine Außenkante der Abschlussscheibe 17, welche an der Stirnseite des Filterelementes 5 angeordnet ist, drückt aber das Verschlusselement 22 entgegen dessen Eigenspannung in die Schließposition, in der die Mündungsöffnung des Bypasses 16 strömungsdicht verschlossen ist. Wird das Filterelement 5 aus dem Aufnahmeraum im Filtergehäuse entnommen, fällt auch die Beaufschlagung des Verschlusselementes 22 weg, sodass dieses aufgrund seiner Eigenspannung in Pfeilrichtung in die Öffnungsposition selbsttätig verschwenken kann.

## Patentansprüche

1. Flüssigkeitsfilter-Wärmetauscher-Einheit, insbesondere für Kraftfahrzeuge, wobei dem Wärmetauscher (3) über einen Zulauf Flüssigkeit zuführbar ist, die nach dem Durchlaufen des Wärmetauschers (3) über einen Ablauf des Wärmetauschers (3) der Rohseite (6) des Filterelements (5) zuführbar ist, welches in einem Filtergehäuse (4) des Flüssigkeitsfilters (2) austauschbar aufgenommen ist, mit einem Bypass (16) im Filtergehäuse (4), der einen Zulaufkanal (11) für die Zufuhr der zu reinigenden Flüssigkeit mit dem das Filterelement (5) aufnehmenden Raum verbindet, wobei der Bypass (16) von einem Schaltglied (17) zu öffnen und zu verschließen ist, und mit einem Ablaufkanal (20) im Filtergehäuse, der die Rohseite (6) des Filterelements (5) mit dem Flüssigkeitskreislauf verbindet, **dadurch gekennzeichnet, dass** das Schaltglied (17) von dem Filterelement (5) gebildet ist, derart, dass bei in das Filtergehäuse (4) eingesetztem Filterelement (5) der Bypass (16) sowie der Ablauf (20) verschlossen und bei aus dem Filtergehäuse (4) entnommenem Filterelement (5) der Bypass (16) sowie der Ablauf (20) geöffnet sind.

2. Flüssigkeitsfilter-Wärmetauscher-Einheit nach Anspruch 1, **dadurch gekennzeichnet, dass** bei eingesetztem Filterelement (5) die Mantelfläche des Filterelements (5) dichtend an der Öffnung des Bypasses (16) anliegt.

3. Flüssigkeitsfilter-Wärmetauscher-Einheit nach einem der vorigen Ansprüche, **dadurch gekennzeichnet, dass** am Filterelement (5) eine stirnseitige Abschlussscheibe (17) angeordnet ist.

4. Flüssigkeitsfilter-Wärmetauscher-Einheit nach Anspruch 3, **dadurch gekennzeichnet, dass** bei eingesetztem Filterelement die Mantelfläche (17a) der stirnseitigen Abschlussendscheibe (17) an der Öffnung des Bypasses (16) anliegt.

5. Flüssigkeitsfilter-Wärmetauscher-Einheit Anspruch 1, **dadurch gekennzeichnet, dass** an der dem Filterelement (5) zugewandten Öffnung des Bypass (16) ein Verschlusselement (22) angeordnet ist, welches von dem Schaltglied zwischen einer Schließposition und einer Öffnungsposition zu verstellen ist.

6. Flüssigkeitsfilter-Wärmetauscher-Einheit nach Anspruch 5, **dadurch gekennzeichnet, dass** das Verschlusselement (22) als Verschlussspange ausgeführt ist, die in Richtung ihrer Öffnungsposition vorgespannt ist.

7. Verwendung der Flüssigkeitsfilter-Wärmetauscher-Einheit nach einem der vorhergehenden Ansprüche zur Ölfilterung und Ölkühlung in einem Kraftfahrzeug.

## Claims

1. Liquid filter-heat exchanger unit, in particular for motor vehicles, liquid being supplied to the heat exchanger (3) via an inlet, the liquid being supplied after having passed through the heat exchanger (3) via an outlet of the heat exchanger (3) to the raw side (6) of the filter element (5) which is replaceably incorporated in a filter housing (4) of the liquid filter (2), with a bypass (16) in the filter housing (4) which connects an inlet port (11) for the supply of the liquid to be cleaned with the space that receives the filter element (5), the bypass (16) being opened and closed by a switching element (17), and with an outlet port (20) in the filter housing which connects the raw side (6) of the filter element (5) with the liquid circuit, **characterized in that** the switching element (17) is formed by the filter element (5) in such a way that, if the filter element (5) is inserted into the filter housing (4), the bypass (16) and the outlet port (20) are closed and, if the filter element (5) is removed from the filter housing (4), the bypass (16) and the outlet port (20) are opened.

2. Liquid filter-heat exchanger unit according to claim 1, **characterized in that**, if the filter element (5) is inserted, the lateral surface of the filter element (5) sealingly abuts the opening of the bypass (16).

3. Liquid filter-heat exchanger unit according to one of the above claims, **characterized in that** a frontal end disk (17) is disposed at the filter element (5).

4. Liquid filter-heat exchanger unit according to claim 3, **characterized in that**, if the filter element (17) is inserted, the lateral surface (17a) of the frontal end disk (17) abuts the opening of the bypass (16).

5. Liquid filter-heat exchanger unit according to claim 1, **characterized in that** at the opening of the bypass (16) facing the filter element (5) a closing element (22) is disposed which is to be switched between a closing position and an opening position by the switching element.

6. Liquid filter-heat exchanger unit according to claim 5, **characterized in that** the closing element (22) is designed as closing clasp which is pre-tensioned in the direction of the opening position.

7. Use of the liquid filter-heat exchanger unit according to one of the above claims for filtering and cooling oil in a motor vehicle.

## Revendications

1. Unité filtre à liquides/échangeur thermique, en particulier pour des véhicules à moteur, un liquide pouvant être envoyé à l'échangeur thermique (3) par l'intermédiaire d'une entrée, liquide qui, après avoir traversé l'échangeur thermique (3), peut être envoyé par l'intermédiaire d'une sortie de l'échangeur thermique (3) au côté brut (6) de l'élément filtrant (5), lequel est placé de manière interchangeable dans un boîtier de filtre (4) du filtre à liquide (2), avec une dérivation (16) dans le boîtier de filtre (4) reliant un canal d'alimentation (11) pour l'entrée du liquide à purifier avec l'espace recevant l'élément filtrant (5), la dérivation (16) pouvant être ouverte et fermée par un élément de commutation (17), et avec un canal de sortie (20) dans le boîtier de filtre qui relie le côté brut (6) de l'élément filtrant (5) au circuit de liquide, **caractérisée en ce que** l'organe de commutation (17) est formé par l'élément filtrant (5) de telle manière que, lorsque l'élément filtrant (5) est inséré dans le boîtier de filtre (4), la dérivation (16) et la sortie (20) soient fermées et, lorsque l'élément filtrant (5) est retiré du boîtier de filtre (4), la dérivation (16) et la sortie (20) soient ouvertes.

2. Unité filtre à liquides/échangeur thermique selon la revendication 1, **caractérisée en ce que,** lorsque l'élément filtrant (5) est inséré, la surface d'enveloppe de l'élément filtrant (5) s'appuie de manière hermétique contre l'ouverture de la dérivation (16).

3. Unité filtre à liquides/échangeur thermique selon l'une des revendications précédentes, **caractérisée en ce qu'**un disque de fermeture frontal (17) est placé sur l'élément filtrant (5).

4. Unité filtre à liquides/échangeur thermique selon la revendication 3, **caractérisée en ce que**, lorsque l'élément filtrant est inséré, la surface d'enveloppe (17a) du disque de fermeture frontal (17) s'appuie contre l'ouverture de la dérivation (16).

5. Unité filtre à liquides/échangeur thermique selon la revendication 1, **caractérisée en ce que** sur l'ouverture de la dérivation (16) tournée vers l'élément filtrant (5) est placé un élément de fermeture (22) qui peut être déplacé par l'organe de commutation entre une position de fermeture et une position d'ouverture.

6. Unité filtre à liquides/échangeur thermique selon la revendication 5, **caractérisée en ce que** l'élément de fermeture (22) est conformé en agrafe de fermeture qui est précontrainte en direction de sa position d'ouverture.

7. Utilisation de l'unité filtre à liquides/échangeur thermique selon une des revendications précitées pour le filtrage d'huile et le refroidissement d'huile dans un véhicule automobile.
